# EUROPEAN PATENT SPECIFICATION

(11) **EP 1 226 745 B1**
(45) Date of publication and mention of the grant of the patent: **23.07.2008**
(21) Application number: 02075380.2
(22) Date of filing: 28.01.2002
(51) Int. Cl.: A01B 63/00, A01B 73/00

(54) **Harvester**
Erntemaschine
Machine de récolte

(30) Priority: 29.01.2001 NL 1017208
(43) Date of publication of application: 31.07.2002
(73) Proprietor: Frans Vervaet B.V., 4521 PE Biervliet (NL)
(72) Inventor: Vervaet, Edwin Joseph Germain, 4521 PT Biervliet (NL); Poppe, Bertus Marinus, 4365 NG Meliskerke (NL); Vervaet, Robin Richard, 4521 PE Biervliet (NL)
(74) Representative: Eveleens Maarse, Pieter

(56) References cited:
- EP-A- 0 136 049
- EP-A- 1 080 621
- DE-A- 3 608 527
- FR-A- 2 655 235
- FR-A- 2 700 915

## Description

The invention relates to an agricultural machine provided with at least one pair of wheels and at least one wheel for performing operations on the land.

Such agricultural machines are generally known.

FR A 2700915 discloses an agricultural machine having a harvesting device attached at its middle part. The machine has displaceable rear wheels so that the device can be easily attached to it by driving the machine over the device in rear motion. EP A 1080621 discloses a self-propelled universal tool carrier for carrying an agricultural tool at its middle part. The front pair of wheels of the carrier can be swung sideways of the carrier by a beam. When swung sideways, the width of the two front wheels can be made more narrow to balance the carrier.

In order to perform operations on the land, it is important for stability that the wheels are placed far apart, while for travel without performing operations it is important that the wheels are placed closer together to improve the quality of travel.

The object of the invention is to provide a machine which can meet both requirements.

This object is achieved by the machine according to claim 1.

Such agricultural machines must normally be driven over the public highway, for instance between the different pieces of land where operations are to be carried out. Vehicles drivable on the public highway have a maximum permissible width. Although in the Netherlands the maximum permissible width is less than 3 metres, exemption is usually granted up to a width of 3.5 metres. This results in structural limitations for such vehicles.

It is pointed out here that most agricultural machines of the above stated type with wheels have the same dimensions, in particular the same width. This invention is certainly not limited hereto; particularly in the case of machines having adjacently placed rear wheels, these latter are usually combined into a single wheel, often with double width.

The measure that the front pair of wheels as seen in the direction of travel is displaceable, has the following advantage.

Agricultural machines are usually adapted to perform operations at their front side, such as harvesting, mowing and so on. Such a device has the largest possible working width. In order to support the machine as well as possible it is therefore important that the wheels in the vicinity of this device are placed as widely as possible. This has the result that the front pair of wheels as seen in the direction of travel must be placed in the widest possible position while carrying out operations on the land, which results in the above mentioned embodiment.

The measure that the pair of wheels is displaceable to a transporting position, wherein the width of the machine is smaller than or equal to the maximum permissible transporting width, has the following advantage.

This measure provides the option, during transport over the public highway, of placing the wheels in a position placed closely together, in which the maximum permissible width for transport over the public highway is not exceeded, and, in an operative position, of placing the wheels far apart so that sufficient space is present between the wheels to impart sufficient stability during travel over the land and during performing of operations, also in the case of the large working width of for instance a mowing machine or a harvester.

When driven over the land, such machines exert pressure on the land which results in compaction of the ground.

Attempts are generally made to prevent such problems by applying wide tires on the wheels, whereby the compaction caused by driving an agricultural machine is reduced. The application of wide tires is however limited to a maximum as a result of the maximum allowable width when such an agricultural machine travels over the public highway, even when the measures according to the invention are applied.

A further preferred embodiment therefore teaches that the wheels are displaceable to an operative position, wherein the projection of the wheels onto a plane extending transversely of the direction of travel comprises at least three projected images which do not overlap, or hardly so, and which each represent a wheel.

Driving over the ground twice or more and the double compaction occurring as a result are hereby prevented.

According to another preferred embodiment the agricultural machine has four wheels and the planes of projection do not overlap each other, or hardly so. Each piece of land is hereby only driven over once by such a wheel.

According to yet another preferred embodiment the agricultural machine has six wheels and the planes of projection of at least four of the wheels do not mutually overlap. Each piece of land is hereby only driven over by a maximum of two wheels instead of by three wheels, so that here also the compaction is greatly reduced.

Another advantage lies in the fact that the harvested or mown material must usually be transported between the front wheels; in view of the width of the mowing or harvesting device, the transporting device required for this purpose is therefore preferably embodied as widely as possible.

According to yet another preferred embodiment, the agricultural machine is formed by a harvester or mowing machine which is adapted to feed the harvested material between the front wheels as seen in the direction of travel.

The wheels are herein movable to the operative position, wherein the distance between the wheels is at least as great as the width of the transporting means in their active position.

Yet another preferred embodiment teaches that the transporting means for feeding the material through between the wheels are adapted to clean the harvested material. This device results in an attractive construction of such a machine.

A final embodiment teaches that the machine comprises a bunker for collecting the harvested, cleaned material.

Although the invention also provides for the arrangement of a conveyor belt for carrying the harvested material onto an accompanying cart, the invention is particularly applicable to a harvester with a bunker; as the bunker fills up, the weight of the agricultural machine is increased, whereby the pressure exerted by the wheels is increased and the advantages of the invention become particularly manifest.

The present invention will be elucidated hereinbelow with reference to the annexed figures, in which:

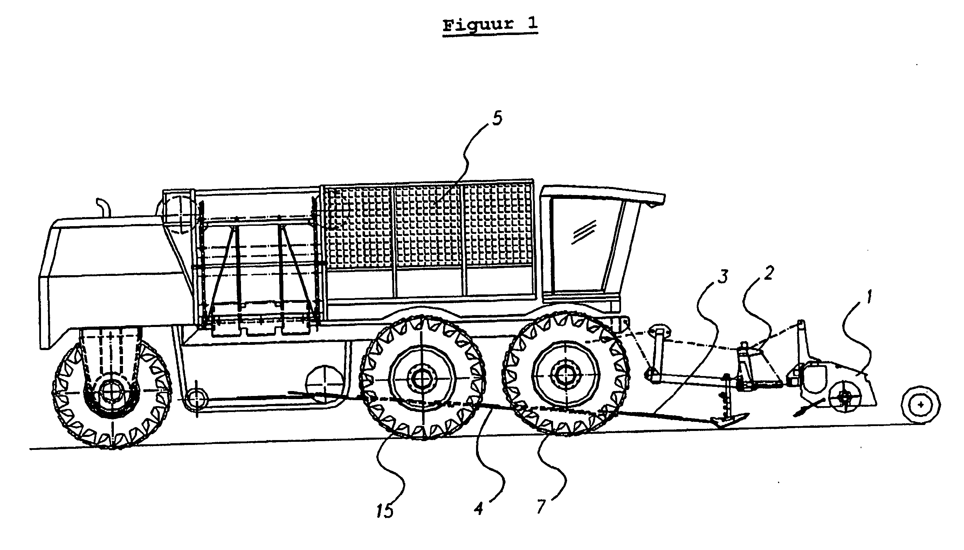

figure 1 is a side view of an agricultural machine according to the invention;
figure 2 is a schematic cross-sectional view of an agricultural machine according to the invention;
figure 3 is a view corresponding with figure 2, wherein the displaceable wheels are displaced to the operative position;
figure 4 shows a rear view of another embodiment of a device according to the present invention; and

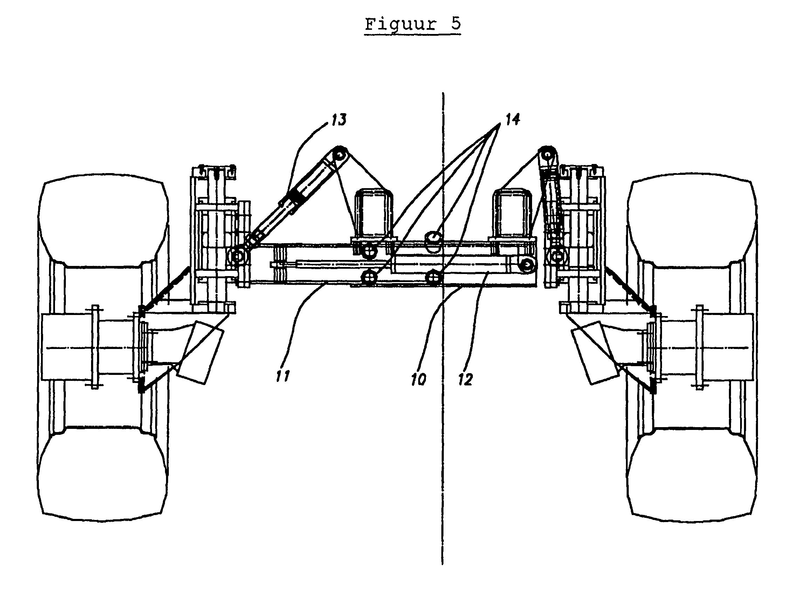

figure 5 shows a cross-sectional view in the plane of the displacing construction of one of the displaceable wheels according to the invention.

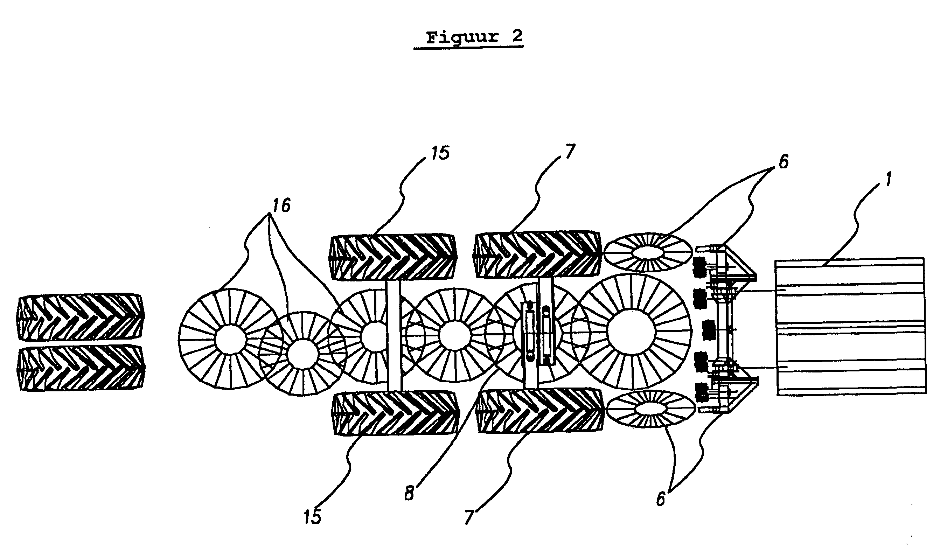

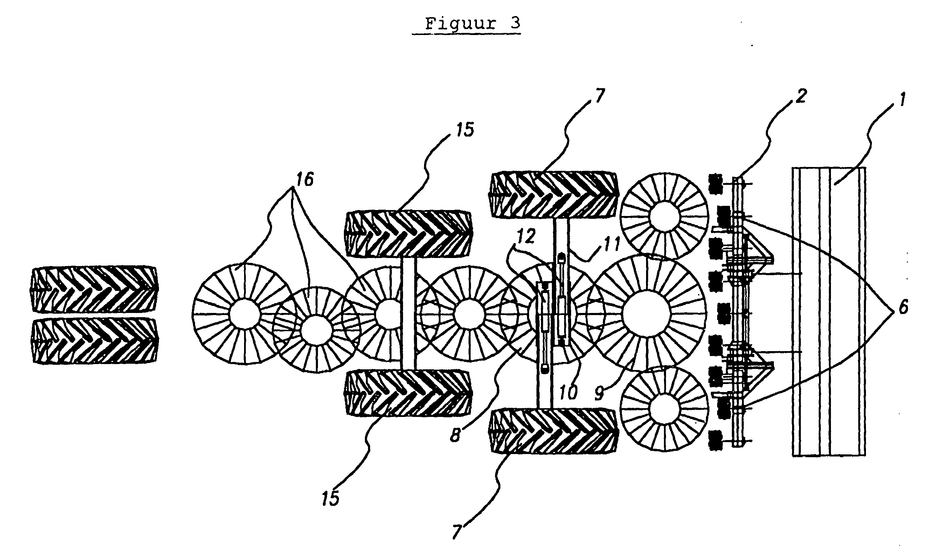

The design is based on a harvesting part with a width of nine rows (see figure 3). Defoliating unit 1 becomes over 4.5 metres in width. In order to stay within the maximum width, it is divided into two parts (see figure 2), whereafter it can be folded up. The harvesting unit 2 takes a foldable form so that the outer parts 6 can be folded up.

The exceptional part is however to be found between the front wheels 7. The first transport cleaning wheels 8 and 9 must be as large as possible so as to process the larger quantity of product at the front. From this wheel the beets are transported through the front wheels. The size of the large wheel is limited by the space available between the first driven wheels 7 of the machine. During the operation of the machine the distance between the wheels and transport cleaning wheel 8 and 9 must be as large as possible, so that the ground which is cleaned out by the wheel is not obstructed. During transport this space may be considerably narrower, as the wheel is not in operation.

A result of this larger working width is that if the number of wheels on the machine is limited to four or less, the ground pressure becomes unacceptably high. The machine can therefore be equipped with extra wheels. If successive wheels travel through the same track two or more times, this results in additional earth compaction. This is also undesirable.

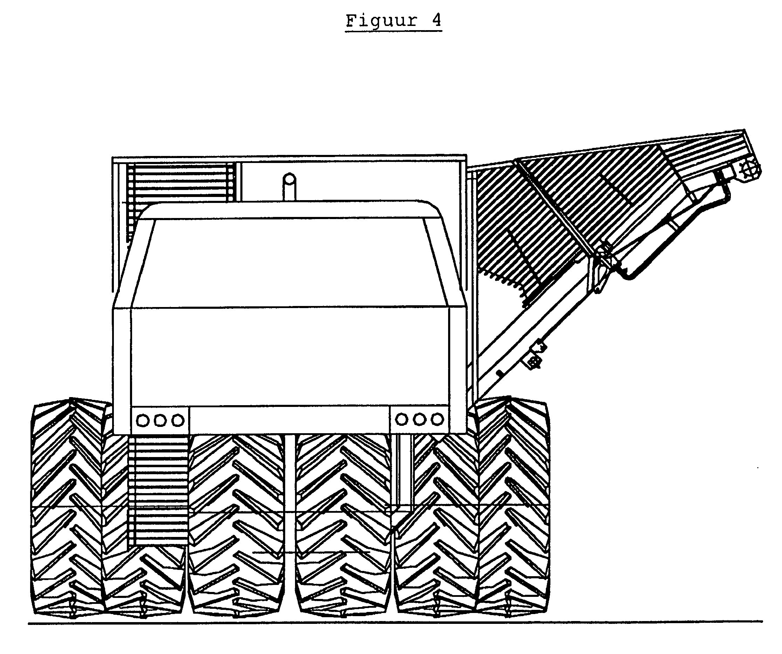

The solution for both problems consists of a machine with four or more wheels, of which the front two driven wheels 7 are width-adjustable. The front axle consists of tubes fitting into each other which are telescopic 10 and 11. In operative position these tubes with the wheels thereon are pulled as closely as possible against wheels 8 and 9 by means of hydraulic cylinders 12 and 13. In order to ensure that the tubes are connected as rigidly as possible at the moment the width is not being changed, the outer tube is embodied with hydraulic pressure cylinders 14 which press on the inner tube. Together with cylinders 12 and 13 the separate tubes are firmly fixed to each other. During operation the wheels are pushed so far outward that the inner side of the front wheels almost corresponds with the outer side of a subsequent set of wheels 15 in a manner such that the tracks do not overlap, as can be seen in figures 3 and 4.

If the working width is less than the sum of the widths of the wheels, these wheels can be extended until the width of the machine is the same as the working width. In this manner the machine becomes more stable against tilting and the whole field is driven over.

The displaceable axle is only required on the first axle. When the beets arrive on transporting means 16 between the set of wheels 15, the flow of beets is already more ordered, and less space is required. These wheels can be mounted closer together.

## Claims

1. Agricultural machine provided with at least one pair of wheels (7) and at least one other wheel (15) for performing operations on the land, wherein at least the wheels (7) forming part of the one pair are displaceable in the direction transversely of the direction of travel of the machine, and wherein each transversably displaceable wheel (7) is mounted on an axle, which axle consists of telescopic! tubes (10,11) fitting into each other, wherein the pair of wheels (7) is displaceable to a transporting position, wherein the width of the machine is smaller than or equal to the maximum permissible transporting width, and **characterized in that** said pair of wheels is further displaceable to an operative position wherein the width of the machine is larger than the maximum permissible transporting width, the maximum permissible transporting width being 3.50 meter, and the pair of wheels (7) being the front pair of wheels (7) as seen in the direction of travel.

2. Agricultural machine as claimed in claim 1, wherein, in an operative position, the projection of the wheels (7) onto a plane extending transversely of the direction of travel comprises at least three projected images which do not mutually overlap, or hardly so, and which each represent a wheel.

3. Agricultural machine as claimed in claim 1 or 2, wherein the agricultural machine has two pairs of wheels (7, 15) and that one pair of wheels (7) is displaceable.

4. Agricultural machine as claimed in claim 1 or 2 wherein the agricultural machine has six wheels and that at least one pair of wheels (7) is displaceable.

5. Agricultural machine as claimed in any of the foregoing claims, wherein the displacing mechanisms (12, 13) of a pair of displaceable wheels are mutually offset in the horizontal plane.

6. Agricultural machine as claimed in any of the foregoing claims, wherein the agricultural machine is formed by a harvester which is adapted to feed the harvested material through between the front wheels as seen in the direction of travel.

7. Harvester as claimed in claims 1 and 5 wherein the front pair of wheels (7) is displaceable to an operative position in which the distance between the wheels is at least as great as the width of the transporting means in their active position.

8. Harvester as claimed in claim 5, wherein the transporting means for feeding the material through between the wheels are adapted to clean the harvested material.

9. Harvester as claimed in any of the foregoing claims, wherein the machine comprises a bunker for collecting theiharvested, cleaned material.

10. Harvester or agricultural machine according to any of the foregoing claims, which comprises a foldable harvesting unit in front of the front wheels.

## Patentansprüche

1. Landmaschine, die mit wenigstens einem Paar Rädern (7) und wenigstens einem anderen Rad (15) zum Durchführen von Arbeiten auf dem Feld versehen ist, wobei wenigstens die Räder (7), die einen Teil des einen Paares bilden, in der Richtung quer zur Fahrtrichtung der Maschine verschiebbar sind, und wobei jedes quer verschiebbare Rad (7) an einer Achse montiert ist, welche Achse aus ineinanderpassenden Teleskoprohren (10, 11) besteht, wobei das Paar Räder (7) in eine Transportposition verschiebbar ist, in der die Breite der Maschine geringer oder gleich wie die maximal zulässige Transportbreite ist, und **dadurch gekennzeichnet, dass** das Paar Räder ferner in eine Arbeitsposition verschiebbar ist, in der die Breite der Maschine größer als die maximal zulässige Transportbreite ist, wobei die maximal zulässige Transportbreite 3,50 Meter ist, und wobei das Paar Räder (7) in der Fahrtrichtung betrachtet das vordere Paar Räder (7) ist.

2. Landmaschine nach Anspruch 1, wobei in einer Arbeitsposition die Projektion der Räder (7) auf eine sich quer zur Fahrtrichtung erstreckende Ebene wenigstens drei projizierte Bilder umfasst, welche nicht oder kaum gegenseitig überlappen, und welche jeweils ein Rad darstellen.

3. Landmaschine nach Anspruch 1 oder 2, wobei die Landmaschine zwei Paar Räder (7, 15) hat und das eine Paar Räder (7) verschiebbar ist.

4. Landmaschine nach Anspruch 1 oder 2, wobei die Landmaschine sechs Räder hat und wenigstens das eine Paar Räder (7) verschiebbar ist.

5. Landmaschine nach einem der vorhergehenden Ansprüche, wobei die Verschiebemechanismen (12, 13) eines Paares verschiebbarer Räder in der horizontalen Ebene gegeneinander versetzt sind.

6. Landmaschine nach einem der vorhergehenden Ansprüche, wobei die Landmaschine von einem Mähdrescher gebildet wird, welcher in der Lage ist, das geerntete Material in der Fahrtrichtung betrachtet zwischen den vorderen Rädern hindurch zu führen.

7. Mähdrescher nach den Ansprüchen 1 und 5, wobei das vordere Paar Räder (7) in eine Arbeitsposition verschiebbar ist, in welcher der Abstand zwischen den Rädern wenigstens so groß wie die Breite der Transportmittel in ihrer aktiven Position ist.

8. Mähdrescher nach Anspruch 5, wobei die Transportmittel zum Zuführen des Materials zwischen den Rädern hindurch in der Lage sind, das geerntete Material zu reinigen.

9. Mähdrescher nach einem der vorhergehenden Ansprüche, wobei die Maschine einen Bunker zum Sammeln des geernteten, gereinigten Materials aufweist.

10. Mähdrescher oder Landmaschine nach einem der vorhergehenden Ansprüche, welche(r) eine faltbare Ernteeinheit vor den vorderen Rädern aufweist.

## Revendications

1. Machine agricole pourvue d'au moins une paire de roues (7) et d'au moins une autre roue (15) destinée à exécuter des opérations sur le sol, dans laquelle au moins les roues (7) faisant partie d'une des paires peuvent être déplacées dans la direction transversale à la direction de déplacement de la machine, et dans laquelle chaque roue (7) pouvant se déplacer transversalement est montée sur un essieu, lequel essieu est constitué de tubes télescopiques (10, 11) s'ajustant l'un dans l'autre, dans laquelle la paire de roues (7) peuvent être déplacées vers une position de transport, dans laquelle la largeur de la machine est inférieure ou égale à la largeur de transport admissible maximale, et **caractérisée en ce que** ladite paire de roues peut en outre être déplacée dans une position opérationnelle dans laquelle la largeur de la machine est supérieure à la largeur de transport admissible maximale, la largeur de transport admissible maximale étant de 3,50 mètres, et la paire de roues (7) étant la paire de roues avant (7) vu dans la direction de déplacement.

2. Machine agricole selon la revendication 1, dans laquelle, dans une position opérationnelle, la projection des roues (7) sur un plan s'étendant transversalement à la direction de déplacement comprend au moins trois images projetées qui ne se chevauchent pas mutuellement, ou à peine, et qui représentent chacune une roue.

3. Machine agricole selon la revendication 1 ou 2, dans laquelle la machine agricole présente deux paires de roues (7, 15) et cette paire de roues (7) peut être déplacée.

4. Machine agricole selon la revendication 1 ou 2 dans laquelle la machine agricole présente six roues et en ce qu'au moins une paire de roues (7) peut être déplacée.

5. Machine agricole selon l'une quelconque des revendications précédentes, dans laquelle les mécanismes de déplacement (12, 13) d'une paire de roues mobiles sont mutuellement décalés dans le plan horizontal.

6. Machine agricole selon l'une quelconque des revendications précédentes, dans laquelle la machine agricole est formée par une moissonneuse qui est adaptée pour amener le matériau moissonné entre les roues avant vu dans la direction de déplacement.

7. Moissonneuse selon l'une quelconque des revendications 1 à 5 dans laquelle la paire de roues avant (7) peut être déplacée vers une position opérationnelle dans laquelle la distance entre les roues est au moins aussi grande que la largeur des moyens de transport dans leur position active.

8. Moissonneuse selon la revendication 5, dans laquelle les moyens de transport destinés à amener le matériau entre les roues sont adaptés pour nettoyer le matériau moissonné.

9. Moissonneuse selon l'une quelconque des revendications précédentes, dans laquelle la machine comprend un silo destiné à collecter le matériau moissonné nettoyé.

10. Moissonneuse ou machine agricole selon l'une quelconque des revendications précédentes, qui comprend une unité de moissonnage pliable à l'avant des roues avant.
